# EUROPEAN PATENT SPECIFICATION

(11) **EP 4 103 533 B1**
(45) Date of publication and mention of the grant of the patent: **07.05.2025**
(21) Application number: 21705330.5
(22) Date of filing: 19.01.2021
(51) Int. Cl.: C05G 3/30, C05G 3/60, C05G 5/30

(54) **FLOW-AID COMPOSITIONS AND METHODS**
FLIESSHILFSMITTEL-KOMPOSITIONEN UND -VERFAHREN
COMPOSITIONS AUXILIAIRES D'ÉCOULEMENT ET DES METHODES

(30) Priority: 12.02.2020 US 202062975512 P
(43) Date of publication of application: 21.12.2022
(73) Proprietor: CORN Products Development Inc., Westchester, IL 60154 (US)
(72) Inventor: AHMED, Gulam, BRIDGEWATER, New Jersey 08807 (US); RICH, Wendell, BRIDGEWATER, New Jersey 08807 (US); SHAH, Himanshu, Bridgewater, New Jersey 08807 (US)
(74) Representative: Novagraaf Group
(86) International application number: PCT/US2021/013864
(87) International publication number: WO 2021/162826

(56) References cited:
- WO-A1-2016/113666
- WO-A1-2021/061439
- CN-A- 105 940 815
- US-A1- 2010 139 347
- WURZBURG ET AL: "MODIFIED STARCHES; PROPERTIES AND USES", 1 January 1986, MODIFIED STARCHES: PROPERTIES AND USES, CRC PRESS, US, PAGE(S) 132 - 147, ISBN: 978-0-8493-5964-4, XP001013560

## Description

The present invention is defined by the claims. Disclosed herein are flow-aid compositions for application to one or more seeds optionally coated/treated with a seed coating composition. More specifically, one or more flow-aid compositions comprising a modified starch or a mixture of a modified starch and a non-modified starch and one or more mineral earth lubricants selected from graphite, tricalcium phosphate, magnesium silicate, aluminum silicate, mica, talc, titanium oxide, kaolin clay, and mixtures thereof are disclosed herein. Further disclosed herein is a method for improving seed planter flowability comprising admixing one or more seeds optionally coated/treated with a seed coating composition with one or more flow-aid compositions comprising a modified starch or a mixture of a modified starch and a non-modified starch and one or more mineral earth lubricants selected from graphite, tricalcium phosphate, magnesium silicate, aluminum silicate, mica, talc, titanium oxide, kaolin clay, and mixtures thereof. One or more flow-aid composition described herein provides a renewable and sustainable alternative with equivalent or superior flowability and plantability to traditionally used lubricants, such as, e.g., talc alone and in combination with graphite.

Agricultural farmers are always looking to improve crop yields to address the increasing demand for food. One approach used by the agricultural industry to boost crop yields is seed treatment (seed coating), where the seeds are treated/coated with one or more active ingredients, including, e.g., insecticides, fungicides, nematicides, nutrients, plant growth hormones, and beneficial microbes to protect the seeds once planted from disease, fungi and/or insects. During the seed coating process, an active ingredient slurry is added on the surface of the seed using seed coating binders. These seed coatings enable the one or more active ingredients to be delivered to the seed or seedling during germination to provide a healthy root mass for excellent emergence and vigor for the growing crops, thereby resulting in higher crop yields.

Farmers plant coated/treated seeds using commercial seed planters. When farmers use an air planter, the fans in the metering device of the air planter move large volumes of air through the planter seed discs. In a medium to high humidity environment, the moisture level gets magnified by the large volumes of atmospheric air being drawn through the planter. The treated/coated seeds are hygroscopic and absorb this moisture causing the coated seeds to be sticky and thereby causing bridging of seeds in the planter. When farmers use a vacuum planter, the coated/treated seeds are added to a hopper that when exposed to medium to high atmospheric humidity causes the coated/treated seeds to become sticky and bridge in the planter. This poor flowability of the coated seeds through the planter results in poor percent singulation, skips, doubles, and an otherwise poor seed release index, which impacts crop yields

In order to mitigate these problems, farmers currently use talc or graphite or talc/graphite mixtures (e.g., 80% talc/20% graphite powder) as a seed flowability and lubricating agent. Talc, however, tends, in the high to medium humidity field environment, to quickly absorb moisture that is present on the surface of the coated/treated seeds thereby preventing the talc from uniformly covering the surface of the seeds, which causes the seeds to clump in the hopper, resulting in poor plantability of the coated/treated seeds. Additionally, talc poses health hazards, especially, if it contains trace levels of asbestos. Graphite, on the hand, is expensive and therefore not a desirable option.

US 2010/139347 A1 discloses a method wherein starch is utilized as a dusting agent for preventing granules from sticking together. The agent may also be applied to seeds.

CN 105 940 815 A discloses seeds coated by a composition comprising modified starch.

Wurzburg et al. discloses in "Modified starches; properties and uses", 1 January 1986, CRC Press, US, pp. 132-147 that starch derivatives of substituted dicarboxylic acids treated with a polyvalent metal or alkaline earth metal ion may possess excellent free flow and water repellency.

WO 2016/113666 A1 discloses a coating composition comprising potato starch and bentonite.

### BRIEF DESCRIPTION OF THE FIGURES

Figure 1 shows photographs of seeds coated/treated with Active Ingredient Blend A, which contains a commercially available seed coating/treatment combined with water, a colorant and a (polymer or bio-renewable starch) binder.
Figure 2 shows photographs of seeds treated with Active Ingredient Blend B, which contains a commercially available seed coating/treatment combined with water, a colorant and a (polymer or bio renewable starch) binder.
Figure 3 shows photographs of the coated/treated seeds of Example 1H that have been admixed in Example 3D with (i) no flow-aid/lubricant, (ii) talc, or (iii) a powder form of the flow-aid composition described herein comprising a hydrophobically modified starch.
Figure 4 is a pictorial depiction of the steel funnel used for the flowability measurements made in Example 2
Figure 5 is a graph of the flowabilty results for Examples 2A-2C.
Figure 6 is a pictorial depiction of the steel funnel used for the flowability measurements made in Example 3.
Figure 7 is a graph of the relative flowability results for Examples 3A-3E.
Figure 8 is a graph of the relative flowability results for Examples 4A-4G.

Disclosed herein is a method for improving seed planter flowability, according to claim 1, comprising: admixing one or more seeds with a flow-aid composition comprising a modified starch or a modified starch and a non-modified starch, wherein said flow-aid composition comprises a mineral earth lubricant selected from graphite, tricalcium phosphate, magnesium silicate, aluminum silicate, mica, talc, titanium oxide, kaolin clay, and mixtures thereof. Further disclosed herein is, according to claim 11, the use of a flow-aid composition comprising a modified starch or a modified starch and a non-modified starch, wherein said flow-aid composition comprises a mineral earth lubricant selected from graphite, tricalcium phosphate, magnesium silicate, aluminum silicate, mica, talc, titanium oxide, kaolin clay, and mixtures thereof to make one or more seeds admixed therewith free-flowing, optionally further reducing seed agglomeration relative to one or more seeds admixed with talc, graphite, or a mixture thereof, wherein said seeds are optionally coated/treated with a seed coating composition comprising an active ingredient and a binder. Even further disclosed herein is a plurality of seeds, according to claim 7, comprising a flow-aid composition comprising a modified starch or a modified starch and a non-modified starch, wherein said flow-aid composition comprises a mineral earth lubricant selected from graphite, tricalcium phosphate, magnesium silicate, aluminum silicate, mica, talc, titanium oxide, kaolin clay, and mixtures thereof; and, optionally, a coating composition comprising an active ingredient and a binder. The one or more modified starches is a hydrophobically modified starch derivatized with one or more anionic moieties being carboxylate, etherified with an alkyl or alkenyl succinate, and complexed with aluminum as a polyvalent cation. The flow-aid composition comprises from 1-99wt.% of said modified starch, non-modified starch, or mixture thereof, based on total weight of the composition. In a further embodiment, the one or more hydrophobically modified starches is an aluminum octenyl succinate starch.

The invention is defined by the claims. Reference will now be made in detail to various embodiments, examples of which are illustrated in the accompanying figures and examples that follow.

As used in this specification and the appended claims, the singular forms "a," "an" and "the" includes plurals unless the context clearly indicates otherwise. Further, all units, prefixes, and symbols may be denoted in its SI accepted form. Throughout this disclosure, various aspects are presented in a range format. Accordingly, the description of a range should be interpreted to be a specific disclosure of all the possible sub-ranges as well as individual numerical values within that range (e.g. 1 to 5 includes 1, 1.5, 2, 2.75, 3, 3.80, 4, and 5).

Unless defined otherwise, all technical and scientific terms used herein have the same meaning as commonly understood by one of ordinary skill in the art to which embodiments of the invention pertain. In describing and claiming the embodiments, the following terminology will be used in accordance with the definitions set out below.

The term "seed" or "seeds" as used herein refers in particular to the ripened ovule of gymnosperms and angiosperms, which contains an embryo surrounded by a protective cover. The protective cover can comprise the seed coat (testa). Some seeds comprise a pericarp or fruit coat around the seed coat. In particular, when this layer is closely adhered to the seed, as in cereal kernels, it is in some cases referred to as a caryopsis or an achene. In practical terms, the term "seed" or "seeds" includes but is not restricted to anything that can be planted in agriculture to produce plants, including pelleted seeds, true seeds, plant seedlings, rootstock, regenerable and plant forming tissue, and tubers or bulbs.

The term "coating" as used herein refers to applying material to a surface of a seed, for instance as a layer of a material around a seed. The term coating includes film coating, pelleting, and encrusting or a combination of these techniques. Pellets obtained with pelleting are also known as seed pills. The coating is preferably applied over substantially the entire surface of the seed, such as over 90% or more of the surface area of the seed, to form a layer. However, the coating may be complete or partial, for instance over 20% or more of the surface area of the seed, or 50% or more.

The term "seed coating composition" as used herein refers to an aqueous composition or slurry that is used to coat seeds.

The term "pre-blend" as used herein refers to an aqueous composition which is formed prior to adding the other components of the seed coating composition, i.e. is in a stable emulsion and/or dispersion form. In one embodiment, the pre-blend is formed in a different location to the seed coating composition.

The term "active" as used herein refers to any component that is directly or indirectly advantageous for a plant or a plant seed, for instance through a biological effect on the plant, seed, or on organisms harmful for a plant such as fungi, pests and insects. Plant enhancing agents include plant protective products, safteners, growth promoters, growth regulators, and the like.

The terms "hydrophobic", "hydrophobically" and "water insoluble" as used herein describe materials that are primarily non-polar, and exhibit limited or no dissolution in water; however, such materials can be suspended in water as molecules or particles.

The term "alkoxy" a used herein means an -OR radical or group, where R is alkyl as defined above, e.g., methoxy, ethoxy, propoxy, or 2- propoxy, n-, iso-, or tert-butoxy, and the like. In certain embodiments, preferred alkoxy groups of the invention have 1 to 6 carbon atoms. In other embodiments, preferred alkoxy groups of the invention have three or more carbon atoms, preferably 4 to 6 carbon atoms. An alkoxy group may be optionally substituted where allowed by available valences. Examples of substituted alkoxy groups include trifluoromethoxy, hydroxymethyl, hydroxyethyl, hydroxypropyl, and alkoxyalkyl groups such as methoxymethyl, methoxyethyl, polyoxoethylene, polyoxopropylene, and similar groups. Unless specifically stated as "unsubstituted" references to chemical moieties herein are understood to include substituted variants.

The term "alkyl" as used herein means a saturated straight chain or branched hydrocarbon chain having, for example, 1 to 20 carbon atoms. In some embodiments, the alkyl groups comprise "C₁ to C₆ alkyl" groups (alternatively termed "lower alkyl" groups) that include methyl, ethyl, propyl, iso-propyl n-butyl, iso- butyl, sec-butyl, t-butyl, pentyl, n-pentyl, tert-pentyl, neo-pentyl, iso-penthyl, 2- methylpentyl, 3-methylpentyl, 4-methylpentyl, 2,3-dimethylbutyl, hexyl, n-hexyl, tert- hexyl, neo-hexyl, iso-hexyl, sec-hexyl, and the like. In certain embodiments, preferred alkyl groups of the invention have 1 to 6 carbon atoms. In certain embodiments, preferred alkyl groups of the invention have 3 or more carbon atoms, preferably 4 to 6 carbon atoms. An alkyl group may be optionally substituted where allowed by available valences. Unless specifically stated as "unsubstituted," references to chemical moieties herein are understood to include substituted variants.

The terms "combination" and "combinations" as used herein refer to a mixture of two or more compounds (or other referenced components).

The terms "free," "no," "substantially no" and "substantially free" refer to a composition, mixture, or ingredient that does not contain a particular compound or to which a particular compound or a particular compound-containing compound has not been added. Should the particular compound be present through contamination and/or use in a minimal amount of a composition, mixture, or ingredients, the amount of the compound shall be less than about 3 wt. %. In some embodiments, the amount of the compound is less than 2 wt. %, less than 1 wt. %, less than 0.5 wt. % or 0.0 wt. %.

The terms "weight percent," "wt. %," "percent by weight," "% by weight," and variations thereof, as used herein, refer to the concentration of a substance as the weight of that substance divided by the total weight of the composition and multiplied by 100. It is understood that, as used here, "percent," "%," and the like are intended to be synonymous with "weight percent," "wt. %," etc.

The methods and compositions may comprise, consist essentially of, or consist of the components and ingredients as well as other ingredients described herein. As used herein, "consisting essentially of" means that the methods and compositions may include additional steps, components or ingredients, but only if the additional steps, components or ingredients do not materially alter the basic and novel characteristics of the claimed methods and compositions.

Disclosed herein is a method for improving seed planter flowability, according to claim 1, comprising admixing one or more seeds with a flow-aid composition comprising a modified starch or a modified starch and a non-modified starch, wherein said flow-aid composition comprises a mineral earth lubricant selected from graphite, tricalcium phosphate, magnesium silicate, aluminum silicate, mica, talc, titanium oxide, kaolin clay, and mixtures thereof. Further disclosed herein is a plurality of seeds comprising a flow-aid composition, according to claim 7, comprising a modified starch or a modified starch and a non-modified starch, wherein said flow-aid composition comprises a mineral earth lubricant selected from graphite, tricalcium phosphate, magnesium silicate, aluminum silicate, mica, talc, titanium oxide, kaolin clay, and mixtures thereof; and, optionally, a seed coating composition comprising an active ingredient and a binder. Even still further disclosed herein is the use of a flow-aid composition, according to claim 11, comprising a modified starch or a modified starch and a non-modified starch, wherein said flow-aid composition comprises a mineral earth lubricant selected from graphite, tricalcium phosphate, magnesium silicate, aluminum silicate, mica, talc, titanium oxide, kaolin clay, and mixtures thereof to make one or more seeds admixed therewith free-flowing.

The flow-aid composition comprises from 1-99wt.% of the modified starch or a modified starch and a non-modified starch, based on total weight of the composition. In some embodiments, the method for improving seed planter flowability described herein further comprises planting the one or more seeds, wherein the one or more seeds is optionally planted with a mechanical seed planter.

In some embodiments, the one or more flow-aid compositions described herein are renewable and sustainable and pose no health hazards. In other embodiments, the flow-aid compositions described herein mix uniformly with and evenly coat the one or more seeds in the planter hopper to provide excellent lubricating properties. In yet even further embodiments, the one or more flow-aid compositions described herein address the safety, environmental, and performance shortcomings associated with using talc alone or in combination with graphite as a seed planter flow-aid. In still other embodiments, the one or more flow-aid compositions described herein are free-flowing. In still even further embodiments, the one or more flow-aid compositions described herein are (i) free-flowing, and/or (ii) reduce seed agglomeration relative to one or more seeds admixed with talc, graphite, or a mixture thereof, wherein said seeds are optionally coated/treated with a seed coating composition comprising an active ingredient and a binder. In still other embodiments, the one or more flow-aid compositions described herein improve crop yields and/or mechanized planting efficiency. In even still further embodiments, the one or more flow-aid compositions described herein reduce clogging of planters and/or seed agglomeration so that seed planting is uniform, and seeds are evenly dispersed without equipment malfunction.

In some embodiments, the seeds are coated/treated with a seed coating composition comprising a binder and an active ingredient. In other embodiments, the seeds are uncoated/untreated. In even still other embodiments, the one or more flow-aid compositions described herein reduce seed clumping and/or bridging relative to one or more seeds admixed with talc, graphite, or a mixture thereof, wherein the one or more seeds are optionally coated/treated with a seed coating composition comprising a binder and an active ingredient. In some embodiments, the active ingredient is (i) a pesticide, a plant growth regulator, a crop desiccant, a fungicide, a bio-pesticide, a biologic containing bacterial or fungal genera, a bactericide, a bacteriostat, an insecticide, a nematicide, an insect repellant, or any combination thereof; or (ii) a pesticide, a plant growth regulator, a crop desiccant, a fungicide, a bactericide, a bacteriostat, an insecticide, an insect repellant, a triazine, a sulfonylurea, a uracil, a urea, and organophosphonate, a nitrilo oxime fungicide, an azole imidazole fungicide, a benzimidazole fungicide, a phenylpyrrole fungicide, a phenylamide fungicide, a carboxomide fungicide, a triazole fungicide, a sulfenamide fungicide, a dithio-carbamate fungicide, a neonicotinoid insecticide, an acylamine fungicide, a chlorinated aromatic, a dichloro aniline fungicide, a carbamate insecticide, an organothiophosphate insecticide, a perchlorinated organic insecticide, a miticide, a propynyl sulfite, a triazapentadiene miticide, a chlorinated aromatic miticide, a tetradifan, a dinitrophenol miticide, a binapacryl, an adjuvant, a surfactant, a fertilizer, a bio-pesticide from plant or microbial origin or biological live beneficial microbe from bacterial or fungal genera, or any combination thereof. In other embodiments, the binder comprises a modified starch, optionally, comprising amylose, amylopectin, or any combination thereof. In still other embodiments, the binder comprises (i) a further modified starch, optionally, comprising amylose, amylopectin, or any combination thereof, (ii) a bio-renewable or synthetic polymer, or (iii) a combination thereof. In still other embodiments, the seed coating composition comprises a binder, an active ingredient, and one or more additional component selected from a solvent, a thickener, a coloring agent, an anti-foaming agent, a biocide, a surfactant and an effect pigment.

In some embodiments, the modified and/or non-modified starches used in the flow-aid compositions or seed coating/treatments comprise a starch base material derived or obtained from any starch source. In some embodiments, the starch source is selected from a starch derived from a plant source including, e.g., cereals, such as, e.g., sorghum; tubers, such as, e.g., potatoes and tapioca; legumes, such as, e.g., peas; corn; wheat; barley; oats; triticale; rice; sago; waxy starches, such as, e.g., waxy maize, waxy potato and waxy rice; high amylose starch, such as, e.g., high amylose corn, i.e., starch having at least 30%, and more particularly, at least 65% amylose content by weight; and others including starches derived from conventional inbreeding techniques or from genetically modified plant species. In some embodiments, starch flour is used. In some embodiments, the starch base is purified to about 70%, 80%, 90%, 95%, or 99% purity. Purification can be performed in accordance with methods known to one of skill in the art. In other embodiments, the starch base may be used from the starch source without purification, wherein the unpurified starch source is used in subsequent derivation steps.

In other embodiments, the starch base is modified using chemical, enzymatic or physical modifications. The starch base is modified to have one or more anionic moieties and a polyvalent cation. In yet even further embodiments, the hydrophobically modified starch and/or modified or non-modified starch are obtained from a starch base selected from corn, high amylose corn, waxy corn, potato, pea, rice, waxy rice, sago, tapioca, waxy tapioca, and mixtures thereof.

In further embodiments, the modified starch contained in the one or more flow-aid compositions described herein or in the seed coating or treatment is a native starch, optionally, containing amylose, amylopectin or combinations thereof (e.g., dent starch) that is modified using chemical, enzymatic or physical modifications. In some embodiments, a further modified starch compound is selected from a crosslinked starch (e.g., adipate and epichlorohydrin); an esterified starch (e.g., acetylated and succinated such as OSA octenyl succinate with or without aluminum salt); an etherified starch (e.g., ethylated starch (e.g., hydroxy ethylated and hydroxy propylated starch), propylated, carboxymethyl, and cationic); a phosphorylated starch (e.g., monophosphate anionic or diphosphate crosslinked); a cationic, anionic, nonionic, or zwitterionic starch; a succinate and substituted succinate starch derivative; an oxidized starch (e.g., using an oxidizing agent to add carbonyl or carboxyl groups to the starch); and combinations thereof (e.g., cationic and anionic (e.g., amphoteric) and crosslinked propylated). In other embodiments, the starch base is hydrolyzed by acid, enzyme, or oxidant to reduce molecular weight, and can also have a different base chemistry or structure from the source materials (e.g., waxy, 100% amylopectin, potato, naturally anionic phosphate, etc). In still other embodiments, the starch base is dextrinized (e.g., dry roasted under acidic conditions) or pregelatinized (e.g., warm or cold water dispersible). Procedures for modifying starches are well-known and described, for example in Modified Starches: Properties and Uses, Ed. Wurzburg, CRC Press, Inc., Florida (1986).

In yet other embodiments, the modified starch (i) has been modified through oxidation, phosphate addition, crosslinking, esterification, etherification, dextrinization, or any combination thereof; (ii) is etherified, methylated, ethylated, propylated, alkoxylated, carboxymethylated, cationic, esterified, acylated, succinated, propylated and phosphate crosslinked, dextrinized, or any combination thereof; (iii) has been hydrolyzed by acid, enzyme, oxidant, and/or physically to reduce molecular weight; or (iv) is acid hydrolyzed-2-hydroxypropyl ether, dextrinized hydrogen octenyl butanedioate, acetate hexadioate, 2-hydroxyl-3-(trimethylammonio)propyl ether chloride, canary dextrin, or any combination thereof.

In another embodiment, the modified starch contained in the one or more flow-aid compositions described herein works in medium and high humidity environments to provide improved or equivalent flowability compared to talc alone or in combination with graphite. In yet still other embodiments, the modified starch contained in the one or more flow-aid compositions described herein is hydrophobically modified. In yet still other embodiments, the modified starch contained in the one or more flow-aid compositions described herein has moisture repellent properties that provide excellent lubricating properties as a flow aid for seed planters.

The hydrophobically modified starch comprises a starch derivatized with one or more anionic moieties being carboxylate, etherified with an alkyl or alkenyl succinate, and complexed with aluminum as a polyvalent cation. In even further embodiments, the hydrophobically modified starch comprises a starch derivatized with one or more anionic moieties being carboxlate, etherified with an alkyl or alkenyl succinate, and complexed with aluminum as a polyvalent cation, wherein the alkyl or alkenyl succinate comprises from 7-20 carbons. In even a still further embodiment, the hydrophobically modified starch comprises a starch derivatized with one or more anionic moieties being carboxylate, etherified with an alkyl or alkenyl succinate, and complexed with aluminum as a polyvalent cation, wherein the alkyl or alkenyl succinate is octenyl succinate, nonyl succinate, decyl succinate or dodecyl succinate.

In yet other embodiments, a starch base is oxidized using an oxidizing agent to provide a starch derivative comprising one or more anionic moieties being carboxylate. In some embodiments, the anionic moieties exist in a larger amount than what naturally occurs in the starch base. In other embodiments, the anionic moieties do not occur naturally on the starch base. In other embodiments, the oxidizing agent is sodium hypochlorite, which is useful for producing a starch carboxylate derivative comprising carboxylate anionic moieties. In some embodiments, the starch carboxylate derivative is further modified with a succinic anhydride or an alkyl or alkenyl succinic anhydride with alkyl or alkenyl chains from 7-20 carbons such as nonyl succinic anhydride, octenyl succinic anhydride, decyl succinic anhydride or dodecyl succinic anhydride.

The polyvalent cation is aluminum.

In other embodiments, the hydrophobically modified starch is an aluminum octenyl succinate starch.

The hydrophobically modified starch comprising a starch derivatized with one or more anionic moieties being carboxylate, an octenyl succinate, and aluminum as a polyvalent cation may be made by oxidizing a starch base to produce a starch derivative which is subsequently mixed with octenyl succinic anhydride to produce a mixture that is further mixed with aluminum as a polyvalent cation.

Typically, starches, when commercially dry, do not flow freely but, rather, tend to agglomerate into clumps or cakes. In other words, the individual starch granules tend to stick to each other and agglomerate into larger masses, thus retarding flow and ease of movement. Alternatively, free-flowing modified starches may exhibit an ease of flow that is comparable to a liquid. For example, placing a quantity of a dry, free-flowing modified starch into a jar and shaking the jar will cause the modified starch to move with a liquid-like motion, whereas an unmodified starch falls about in clumped masses. Further, when placing ordinary starch in a standard separatory funnel having a tube of about 6 mm inner diameter, the ordinary starch will not pour through the tube even when the funnel is shaken strongly. In contrast, a major portion of a free-flowing modified starch, when put under the same conditions, will pour from the funnel, even when the funnel is kept absolutely still. The one or more flow-aid compositions described herein exhibit this free-flowing property.

The one or more flow-aid compositions described herein further comprises a mineral earth lubricant selected from graphite, tricalcium phosphate, magnesium silicate, aluminum silicate, mica, talc, titanium oxide, kaolin clay, and mixtures thereof. In still other embodiments, the one or more flow-aid composition described herein comprises from 0.5 to 50wt.% of the mineral earth lubricant, based on total weight of the composition.

In yet even further embodiments, the one or more seeds admixed with one or more flow-aid compositions described herein are (i) an agricultural seed, a vegetable seed, an herb seed, a wildflower seed, an ornamental seed, a grass seed, a tree seed, a bush seed, or any combination thereof; (ii) selected from soybean, cotton, corn, peanut, maize, wheat, barley, oat, rye triticale, mustard, sunflower, sugar beet, safflower, millet, chicory, flax, rapeseed, buckwheat, tobacco, hemp, cannabis, alfalfa, signal grass, clover, sorghum, chick pea, bean, pea, vetch, rice, sugar cane, linseed, asparagus, chives, celery, leek, garlic, beetroot, spinach, beet, curly kale, cauliflower, sprouting broccoli, savoy cabbage, white cabbage, red cabbage, kohlrabi, Chinese cabbage, turnip, endive, chicory, water melon, melon, cucumber, gherkin, marrow, parsley, fennel, pea, beans, radish, black salsify, eggplant, sweet corn, pop-corn, carrot, onion, tomato, pepper, lettuce, snap bean, cucurbit, shallot, broccoli, brassica, brussel sprouts, and any combination thereof; or (iii) a corn seed, cotton seed, rice seed, sorghum seed, oat seed, rye seed, barley seed, soybean seed, vegetable seed, wheat seed, sugarbeat seed, sunflower seed, lettuce seed, hemp seed, cannabis seed, spinach seed, or mixtures thereof. In some embodiments, the one or more seeds are capable of germinating. In other embodiments, the one or more seeds are deprived of husk (so-called husk seed or de-hulled seed). In yet still other embodiments, the one or more seeds are primed or not primed (having been subjected to a treatment to improve the germination rate, e.g. osmopriming, hydropriming, and matrix priming).

In one embodiment, the one or more seeds are coated with a seed coating composition comprising a binder and an active ingredient to provide one or more coated/treated seeds, wherein said coated/treated seeds are admixed with one or more flow-aid composition described herein and placed in a commercial seed planter for planting. In some embodiments, the commercial seed planter is an air planter (typically uses fans in the air-planter metering device to move large volumes of air through the planter seed discs) or a vacuum planter.

In some embodiments, the one or more flow-aid compositions described herein are applied at any point after the one or more seeds are coated/treated with the seed coating composition up to the point the one or more seeds are planted. In other embodiments, the one or more flow-aid composition described herein is admixed with the one or more seeds at the planting site, is admixed with the one or more seeds after the one or more seeds is coated/treated with a seed coating composition comprising a binder and an active ingredient, or is admixed with the one or more seeds contemporaneously with the one or more seeds being coated/treated with a seed coating composition comprising a binder and an active ingredient. In still another embodiment, one or more flow-aid compositions described herein are admixed with one or more seeds in the planter or hopper either manually or with a mechanized system, such as, e.g. a mechanized metering system. In some embodiments, one or more flow-aid compositions described herein are substantially-free from talc alone or in combination with graphite.

In a further embodiment, the flow aid composition is applied to the one or more seeds at a rate of about 2.8-141.8g/45.4kg, about 14.2-113.4g/45.4kg, about 28.4-99.2g/45.4kg, about 42.5-85.0g/45.4kg, about 56.7-85.0g/45.4kg, about 56.7-70.9g/45.4kg, or about 5.7g/45.4kg, about 14.2g/45.4kg, about 21.3g/45.5kg, about 28.4g/45.4kg, about 56.7g/45.4kg, about 70.9g /45.4kg, about 85.0g/45.4kg, about 99.2g/45.4kg, about 114.4g/45.4kg, about 127.6g/ 45.4kg, about 141.8g/45.4kg, or about 5.7g/45.4kg or more, about 14.2g/45.4kg or more, about 21.3g/ 45.4kg or more, about 28.4g/45.4kg or more, about 42.5g/45.4kg or more, about 56.7g/45.4kg or more, about 70.9g/45.4kg, about 85.0g/45.4kg or more, about 99.2g/45.4kg or more, about 113.4 g/45.4kg or more, about 127.6g/45.4kg or more, or about 141.8g/45.4kg or more. In yet another embodiment, one or more flow-aid composition described herein is applied to one or more seeds in a manner sufficient to convey the desired property.

### Coated Seeds

An embodiment includes seeds which have been coated and then subsequently treated with the flow aid of the disclosure. The seed is a plant seed, for example a seed of an agricultural crop, a vegetable seed, an herb seed, a wildflower seed, an ornamental seed, a grass seed, a tree seed, or a bush seed.

Preferably, the plant seed is of an agricultural crop. The seed may be of the order of Monocotyledoneae or of the order of Dicotyledoneae. Suitable seeds include seed of soybean, cotton, corn, peanut, maize, wheat, barley, oat, rye triticale, mustard, oil seed rape (or canola) sunflower, sugar beet, safflower, millet, chicory, flax, rapeseed, buckwheat, tobacco, Cannabis, hemp seed, alfalfa, signal grass, clover, sorghum, chick pea, beans, peas, vetch, rice, sugar cane, and linseed. Examples of suitable vegetable seeds include asparagus, chives, celery, leek, garlic, beetroot, spinach, beet, curly kale, cauliflower, sprouting broccoli, savoy cabbage, white cabbage, red cabbage, kohlrabi, Chinese cabbage, turnip, endive, chicory, water melon, melon, cucumber, gherkin, marrow, parsley, fennel, pea, beans, radish, black salsify, eggplant, sweet corn, pop-corn, carrot, onion, tomato, pepper, lettuce, snap bean, cucurbit, shallot, broccoli, Brassica, and Brussels sprout.

Preferably, the plant seed is capable of germinating. Optionally, the seed may be deprived of husk (so-called husked seed or de-hulled seed). The seed may be primed or not primed (having been subjected to a treatment to improve the germination rate, e.g. osmopriming, hydropriming, matrix priming).

Coated seeds are typically admixed with the flow aid and then placed in a commercial seed planter. In air planter, typically uses the fans in the air-planter metering device moves large volumes of air through the planter seed discs. Vacuum planters may also be used. The coated seeds are placed in the vacuum planter hopper.

### Use of the Flow aid

The components of the compositions of the present invention may be applied to treated seed, and they may be applied at any point just after the treatment of seeds (Posttreatment powder application) or during the planting of those seeds.

The flow aid may be added in situ at the planter site, after the seed coating process or contemporaneously with the seed coating process. The coating material can be prepared by blending the various ingredients together. In some embodiments the compositions form a premix to which is then blended with the active ingredients.

The disclosure also provides for a method of adding a flow aid to a seed. In another aspect, the flow aid is added to a pre-treated seed prior to the pre-treated seed being placed in soil. In another aspect, a seed is pre-treated by both a treating agent and flow aid described herein prior to planting. In yet another aspect, the flow aid can be applied to seed in a planter or hopper either manually or with a mechanized system, such as a mechanized metering system. In an aspect, the flow aid is added to seed in a planter.

In another aspect, a treating agent is added to a seed prior to placing seed into a bag or container for shipping to a planting site. After the seed arrives at the planting site, the flow aid is added to the seed. In yet another aspect, the flow aid described herein is added to pre-treated seed (seed previously treated with a treating agent) in a planter mechanism or hopper of the planting mechanism. In another aspect, a treating agent and a lubricant composition are added to a seed prior to the seed being loaded on a planter or hopper for planting.

In certain embodiments, the method described herein does not include talc. In certain embodiments the method described herein does not include graphite or graphite blends.

In an aspect, the flow aid composition is applied to a seed at a rate of about 2.8 - 141.8 g/45.4 kg , about 14.2 - 113.4 g/45.4 kg , about 28.4 - 99.2 g/45.4 kg, about 42.5 - 85.0 g/45.4 kg , about 56.7 - 85.0 g/45.4 kg , about 56.7 - 70.9 g/45.4 kg , or about 5.7 g/45.4 kg, about 14.2g/45.4 kg, about 21.3g/45.5 kg, about 28.4 g/45.4 kg, about , about 56.7 g/45.4 kg, about 70.9 g/45.4 kg, about 85.0 g/45.4 kg, about 99.2 g/45.4 kg, about 114.4 g/45.4 kg, about 127.6 g/45.4 kg, about 141.8 g/45.4 kg, or about 5.7 g/45.4 kg or more, about 14.2 g/45.4 kg or more, about 21.3 g/45.4 kg or more, about 28.4 g/45.4 kg or more, about 42.5 g/45.4 kg or more, about 56.7 g/45.4 kg or more, about 70.9 g/45.4 kg, about 85.0 g/45.4 kg or more, about 99.2 g/45.4 kg or more, about 113.4 g/45.4 kg or more, about 127.6 g/45.4 kg or more, or about 141.8 g/45.4 kg or more. In yet another aspect, a composition described herein is applied to a seed in a manner sufficient to convey the desired property.

### EXAMPLES

Embodiments of the present invention are further defined in the following nonlimiting Examples. It should be understood that these Examples, while indicating certain embodiments of the invention, are given by way of illustration only.

### Example 1

### Preparing Seeds Coated/Treated with Seed Coating Compositions

### Seed Coating Compositions:

The commercially available seed coating/treatment product Avicta^{®} Complete Corn 250 seed treatment (Syngenta Crop Protection, LLC, Greensboro, NC), the composition of which is set forth in Table 1 (hereinafter "Active Ingredient Blend A"), was used in this Example to coat/treat seeds. Additionally, the commercially available seed coating/treatment product Acceleron^{®} seed treatment (Bayer Crop Science, St. Louis, MO), the composition of which is set forth in Table 2 (hereinafter "Active Ingredient Blend B"), was also used in this Example to coat/treat seeds.

| **Table 1. Active Ingredient Blend A** | | |
|---|---|---|
| **Active Ingredients** | **Function** | **Wt.%** |
| Thiamethoxam | Insecticide | 11.7 |
| Abamectin | Insecticide | 10.3 |
| Thiabendazole | Insecticide | 2.34 |
| Fludioxonil | Fungicide | 0.3 |
| Mefenoxam | Fungicide | 0.23 |
| Azoxystrobin | Fungicide | 0.12 |
| Inerts | Fungicide | 75.01 |

| **Table 2. Active Ingredient Blend B** | | |
|---|---|---|
| **Active Ingredients** | **Function** | **Wt%** |
| Acceleron^{®} D-281 fungicide seed treatment (fluoxastrobin, 41.4%) | Fungicide | 1.81 |
| Acceleron^{®} DX-342 fungicide seed treatment | Fungicide | 1.84 |
| (Prothioconazole, 41%) | | |
| Acceleron^{®} DX-309 fungicide seed treatment (Metalaxyl, 28.35%) | Fungicide | 0.71 |
| Poncho^{®} Votivo^{®} seed treatment (Clothianidin, 40.3% and Bacillus Firmus (1-582), 8.1%) | Insecticide & Nematicide | 9.38 |
| Water | Diluent | 86.26 |

The seed coating starch binders and commercial synthetic polymers that were used for the seed coatings/treatments of this Example 1 are set forth in Table 3 Liquid starch 2 is according to the invention.

| **Table 3. Seed Coating Starch Binders and Commercial Synthetic Polymers** | | |
|---|---|---|
| **Reference Name** | **Classification** | **Description** |
| Liquid Starch 1 | Bio-renewable | Cationic modified starch |
| Liquid Starch 2 | Bio-renewable | Octenyl succinate modified |
| Liquid Starch 3 | Bio-renewable | Hydroxypropyl ether modified |
| Liquid Starch 4 | Bio-renewable | Non-modified corn starch |
| Commercial Polymer 1 | Synthetic | Precise 1006^{® ,} Bayer Crop Sciences, St. Louis, MO) |
| Commercial Polymer 2 | Synthetic | Flo Rite^{®} 1197, (BASF, RTP, NC) |

### Seed Coating/Treatments:

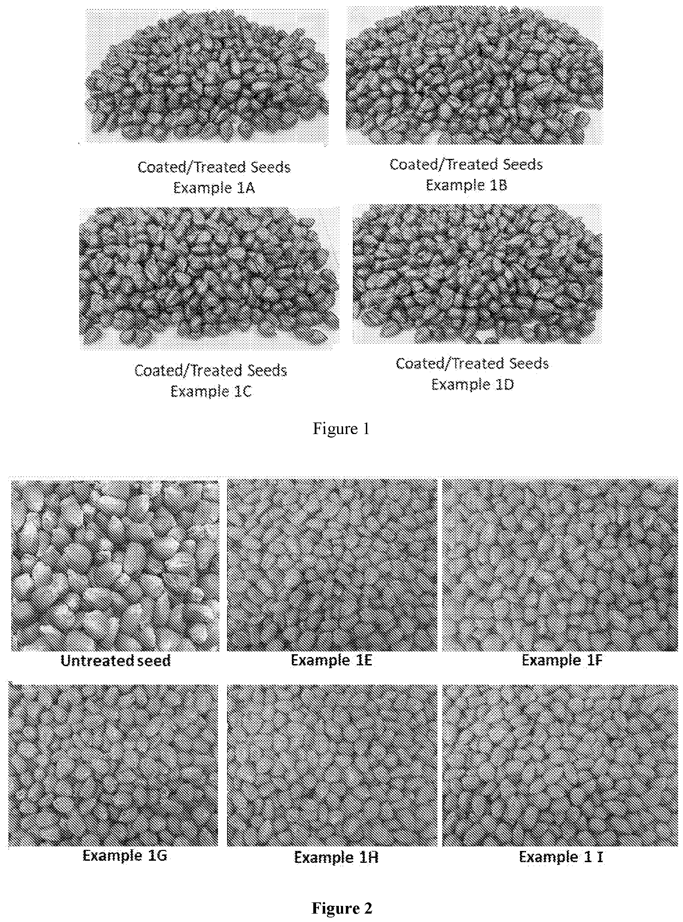

For seeds coated/treated with Active Ingredient Blend A, 0.454 kg batches of corn seed (XL-Corn Seed, Round variety from Corteva, Indianapolis, IN) were coated using a clear plastic bag. The seed coating/treatment slurry was prepared by combining Active Ingredient Blend A, a liquid starch or synthetic polymer set forth in Table 3, water and a colorant. The corn seeds were subsequently coated by adding this seed coating/treatment slurry and 0.454 kg of untreated corn seed to a plastic bag and shaking for 50-seconds. After 50-seconds, 1.0 g of dry Mica powder (Pyrisma^{®} F80-51 SW Ferric red (Merck KGaA, Darmstadt, Germany, particle size d50 = 16 µ)) was added to each bag and then shaken for an additional 10-seconds to provide the uniformly coated, dry seeds set forth in Table 4 and depicted pictorially in Figure 1. Only example 1B in Table 4 is according to the invention.

| **Table 4. Seeds Coated/Treated With Active Ingredient Blend A** | | | | |
|---|---|---|---|---|
| | **Example 1A** | **Example 1B** | **Example 1C** | **Example 1D** |
| Active Ingredient Blend A (g) | 340 | 340 | 340 | 340 |
| Liquid Starch 1 (g) | 85 | - | - | - |
| Liquid Starch 2 (g) | - | 85 | - | - |
| Liquid Starch 3 (g) | - | - | 85 | - |
| Synthetic Polymer 1 (g) | - | - | - | 85 |
| Red Colorant (g) | 85 | 85 | 85 | 85 |
| Water (g) | 200 | 200 | 200 | 200 |
| Total Seed Coating Slurry g/45.4 kg seed | 710 | 710 | 710 | 710 |

For seeds coated/treated with Active Ingredient Blend B, 136 kg batches of corn seeds (Corn seeds, Variety S-2338, Ingredion Inc., Westchester, IL) were coated using a Continuous Batch Treating System. The Active Ingredient Blend B, a liquid starch or synthetic polymer binder set forth in Table 3, and a colorant were added to the Treater bowl of the Continuous Batch Treating System using an automated calibrated metering device for a treatment cycle time of 60-seconds to provide the uniformly covered, dry seeds set forth in Table 5 and depicted pictorially in Figure 2. Only example 1F in Table 5 is according to the invention.

| **Table 5. Seed Coating/Treatment Using Active Ingredients Blend B** | | | | | |
|---|---|---|---|---|---|
| | **Example 1E** | **Example 1F** | **Example 1G** | **Example 1H** | **Example 1I** |
| Active Ingredient Blend B (g) | 470 | 470 | 470 | 470 | 470 |
| Liquid Starch 1 (g) | 170 | - | - | - | - |
| Liquid Starch 2 (g) | - | 170 | - | - | - |
| Liquid Starch 3 (g) | - | - | 170 | - | - |
| Liquid Starch 4 (g) | - | - | | 170 | |
| Synthetic Polymer 2 (g) | - | - | - | - | 170 |
| Red Colorant (g) | 10 | 10 | 10 | 10 | 10 |
| Total Seed Coating Slurry g/45.4 kg seed | 650 | 650 | 650 | 650 | 650 |

### Example 2

### Flowability Comparison Of Coated/Treated Seeds In The Presence and Absence of a Flow-Aid

This Example compared the flowability of Example 1D coated/treated seeds that were admixed with a hydrophobically modified starch (starch, 1-octenylbutanediote, aluminum salt) to Example 1D coated/treated seeds admixed with an 80% Talc/20% graphite composition (hereinafter "80/20 Composition") and Example 1D coated/treated seeds that were not admixed with a flow-aid using a rate of 56.0g/45.4 kg seed.

### Reference

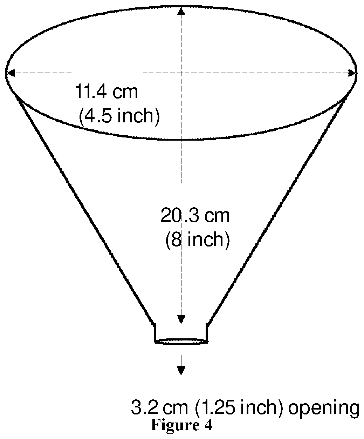

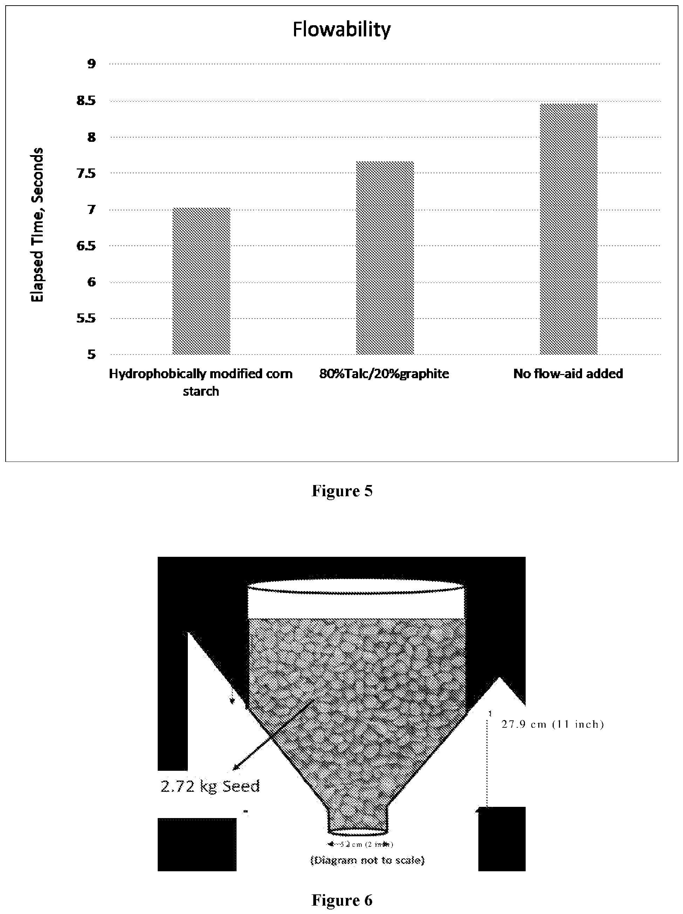

**Example 2A:** 1g of the 80/20 Composition in powder form was mixed well with 0.907 kg of the Example 1D seeds. The seeds were subsequently passed through a 1.9 liter (2-quart) funnel (see, schematic diagram of the funnel depicted in Figure 4) and elapsed time in seconds was recorded. 14 replicates were performed and the results averaged. Results of Example 2A are presented in Table 6 and depicted graphically in Figure 5.

### Example 2B (according to the invention):

: 1g of hydrophobically modified starch powder was mixed well with 0.907 kg of the Example 1D seeds. The seeds were subsequently passed through the 1.9 liter (2-quart) funnel depicted in Figure 4 and elapsed time in seconds was recorded. 14 replicates were performed and the results averaged. Results of Example 2B are presented in Table 6 and depicted graphically in Figure 5, the lower values indicate better flowability. The results generated from this test indicate that the hydrophobically modified starch powder performs slightly better or equivalent to the 80/20 Composition when using the same amount of powder lubricant.

### Reference

**Example 2C:** Same method was used for Example 2C as used for Examples 2A and 2B. For Example 2C, flowability was measured without any flow-aid (Example 1D coated/treated seeds were used "as is").

| **Table 6. Relative Flowability Results for Examples 2A-2C** | | | |
|---|---|---|---|
| **Replicates** | **Ex. 2A 80/20 Composition (seconds)** | **Ex. 2B Hydrophobically modified starch, octenyl succinate modified (Ex. 2B) (seconds)** | **Ex. 2C No Flow-aid (seconds)** |
| | | | |
| 1 | 7.78 | 7.15 | 8.13 |
| 2 | 7.83 | 6.83 | 8.28 |
| 3 | 7.64 | 7.21 | 8.52 |
| 4 | 7.60 | 7.11 | 8.73 |
| 5 | 7.45 | 7.32 | 8.40 |
| 6 | 7.60 | 6.96 | 8.09 |
| 7 | 7.75 | 7.13 | 8.66 |
| 8 | 7.78 | 6.96 | 8.60 |
| 9 | 7.86 | 7.36 | 8.60 |
| 10 | 7.74 | 7.2 | 8.58 |
| 11 | 7.65 | 6.91 | not measured |
| 12 | 7.40 | 7.1 | not measured |
| 13 | 7.46 | 6.91 | not measured |
| 14 | 7.63 | 6.28 | not measured |
| Mean value | 7.66 | 7.03 | 8.46 |
| Std. Dev | 0.145 | 0.268 | 0.220 |

### Example 3

### Flowability Comparison of Coated/Treated Seeds Admixed with Talc or Hydrophobically Modified Starch

This Example compared the flowability of seeds coated/treated with active ingredient blend B that were subsequently admixed with either talc or a hydrophobically modified starch (starch, 1-octenylbutanediote, aluminum salt) using a rate of 58g/45.4 kg seed.

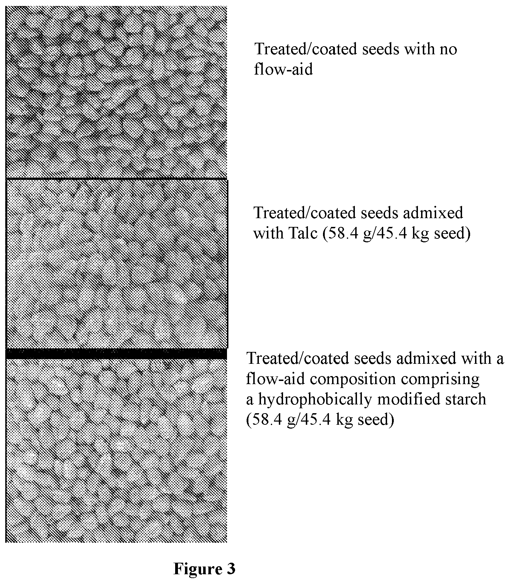

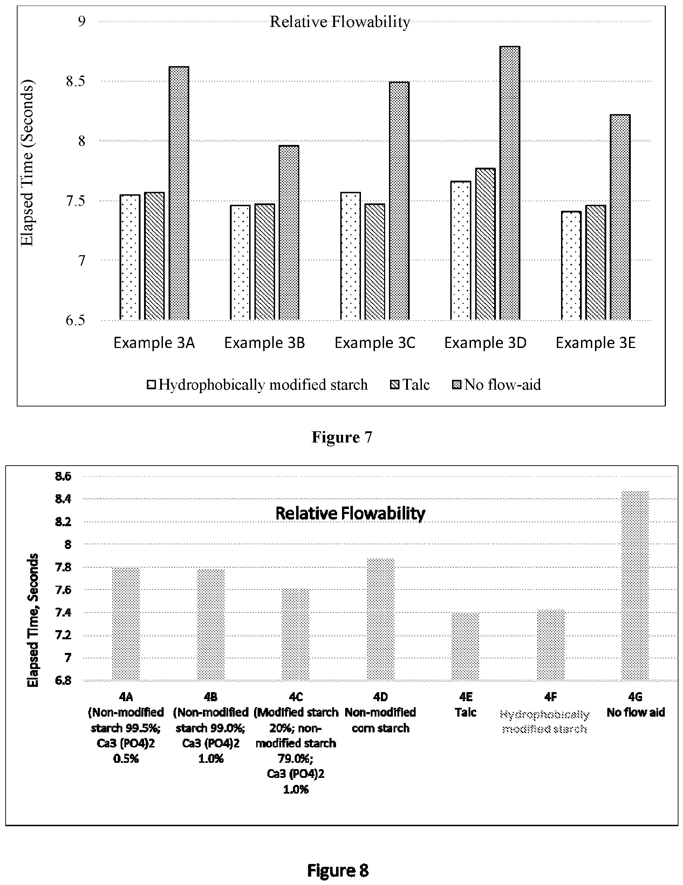

**Examples 3A, 3B, 3C, 3D, and 3E:** 3.5 g of talc powder or hydrophobically modified powdered starch was mixed well with 2.72 kg of Example 1E, 1F, 1G, 1H or 1I coated/treated seeds. The seeds were subsequently passed through the funnel depicted in Figure 6 and elapsed time in seconds was recorded. The flowability tests were performed in a fume hood in which the relative humidity was 35±4 % and the temperature was 23.8±0.9° C. 10 replicates for each Example were performed and the results averaged. Figure 3 is a picture of Example 1H coated/treated seeds that have been further admixed with (i) no flow-aid/lubricant, (ii) talc, or (iii) a hydrophobically modified powdered starch, where, in contrast to talc, the hydrophobically modified powdered starch uniformly covered the Example 1H coated/treated seeds to provide excellent lubricating properties. Relative flowability data is presented in Table 7 and graphically depicted in Figure 7 for Examples 3A to 3E. Only Example 3B in Table 7 is according to the invention.

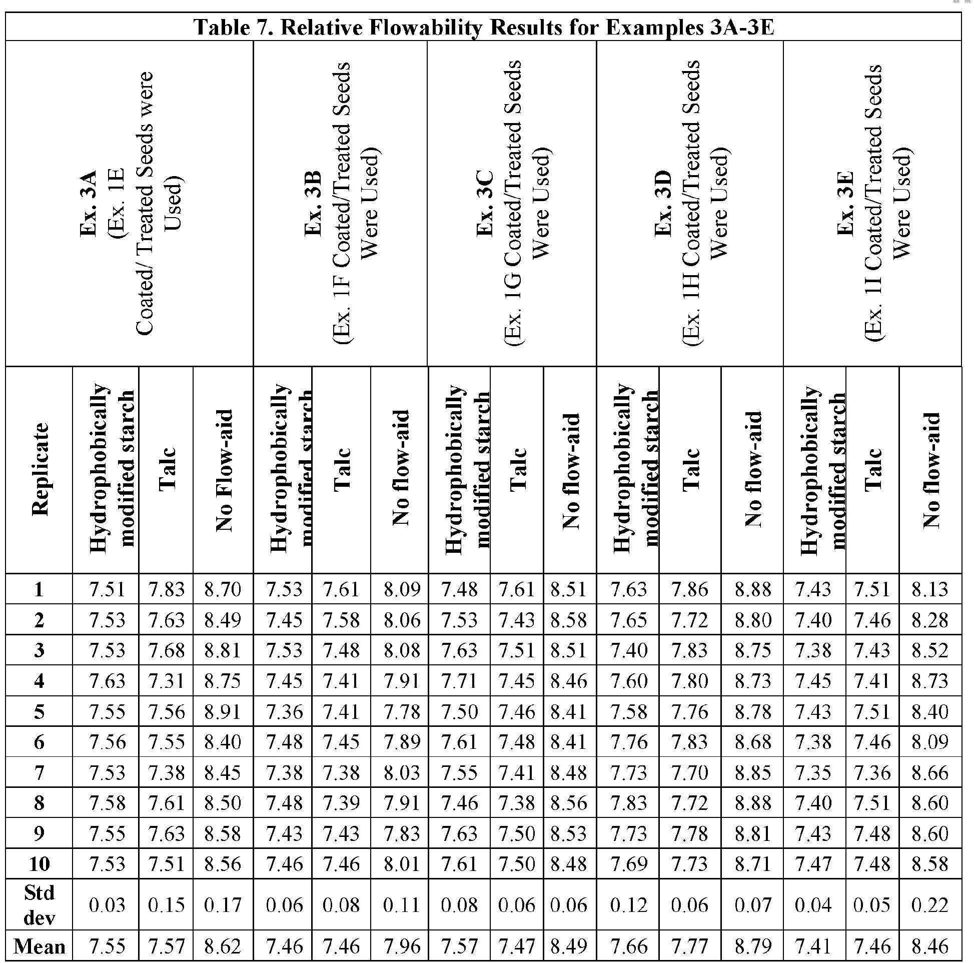

The Table 7 data shows that hydrophobically modified starch performed similarly to Talc at 35% Relative Humidity and 23.8 °C.

### Example 4

### Flowability Comparison of Coated/Treated Seeds in the Presence and Absence of Various Flow-Aids

The flowability of seeds coated/treated with Active Ingredient Blend B that were either not admixed with a flow-aid or mixed with talc were compared to seeds coated/treated with Active Ingredient Blend B that were admixed with a hydrophobically modified starch (starch, 1-octenylbutanediote, aluminum salt), a non-modified corn starch, an octenylsuccinic anhydride ("OSA") modified corn starch, a non-modified corn starch blended with tricalcium phosphate, or a starch blend containing a non-modified corn starch, a hydrophobically modified starch, and tricalcium phosphate using a 58g/45.4 kg seed rate.

**Examples 4A to 4F:** 3.5 g of each of a hydrophobically modified starch (starch, 1-octenylbutanediote, aluminum salt) (Example 4F), a non-modified corn starch (Example 4D), talc (Example 4E), an octenylsuccinic anhydride ("OSA") modified corn starch (Example 4F), a non-modified corn starch blended with tricalcium phosphate (Examples 4A and 4B), or a starch blend containing a non-modified corn starch, a hydrophobically modified starch, and tricalcium phosphate (Example 4C)(were each separately mixed well with 2.72 kg of Example 1B coated/treated seeds The seeds were subsequently passed through the funnel depicted in Figure 6 and elapsed time in seconds was recorded.

**Example 4G:** 2.72kg of Example 1B coated/treated seeds were passed through the funnel depicted in Figure 6 and elapsed time in seconds was recorded. The Example 4G seeds were not admixed with a flow-aid before being passed through the funnel.

The flowability tests were performed in a fume hood in which the relative humidity was 35±4 % and temperature was 23.8±0.9° C. 10 replicates per test were performed and the results were averaged. Relative flowability data is presented in Table 8 and graphically depicted in Figure 8. Only example 4F in Table 8 is according to the invention.

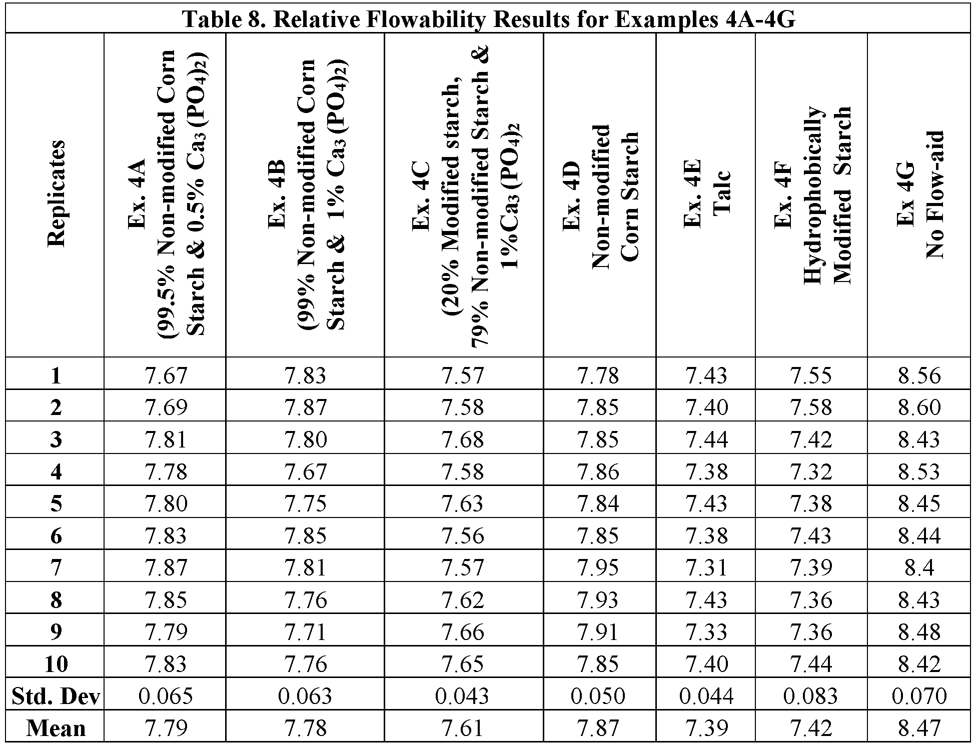

The data showed that coated/treated seeds admixed with a modified starch, non-modified starch, or a modified and non-modified starch blend mixed with tricalcium phosphate have better flowability than coated/treated seeds that are not admixed with a flow-aid.

### Example 5

### Plantability of Seeds Coated/Treated with Active Ingredient Blend B and Admixed with a Flow-Aid

A plantability test was run to measure % singulation, skips and misses. Treated seeds were preconditioned for 48 hours at testing conditions. Precision Planting meter eSet using John Deere vacuum planting head was used for this testing. The planting meter was set to a setting with a seeds/4047 m2 (seeds/acre) count of 35,000, a speed of 6.6 kmh, and a vacuum rate of 124.8 kPa. The vacuum planting unit simulates planting in the field and uses air pressure to attach the seeds to the disk. The machine records information such as % singulation, skips and multiples. The seeds from Example 1H were used in this test. Approximately 1000g of seeds were used for each test (amount that fills the hopper). 1.32g of the 80/20 Composition of Example 2 in powder form was used for each run and added to the seeds in the hopper. For hydrophobically modified starch (starch, 1-octenylbutanediote, aluminum salt) alone and in combination with a non-modified corn starch, 1.32g of the starch being tested was added to the seeds in the hopper. The data from this test is presented in Table 9. Examples 5B-5D and 5F-5H are according to the invention.

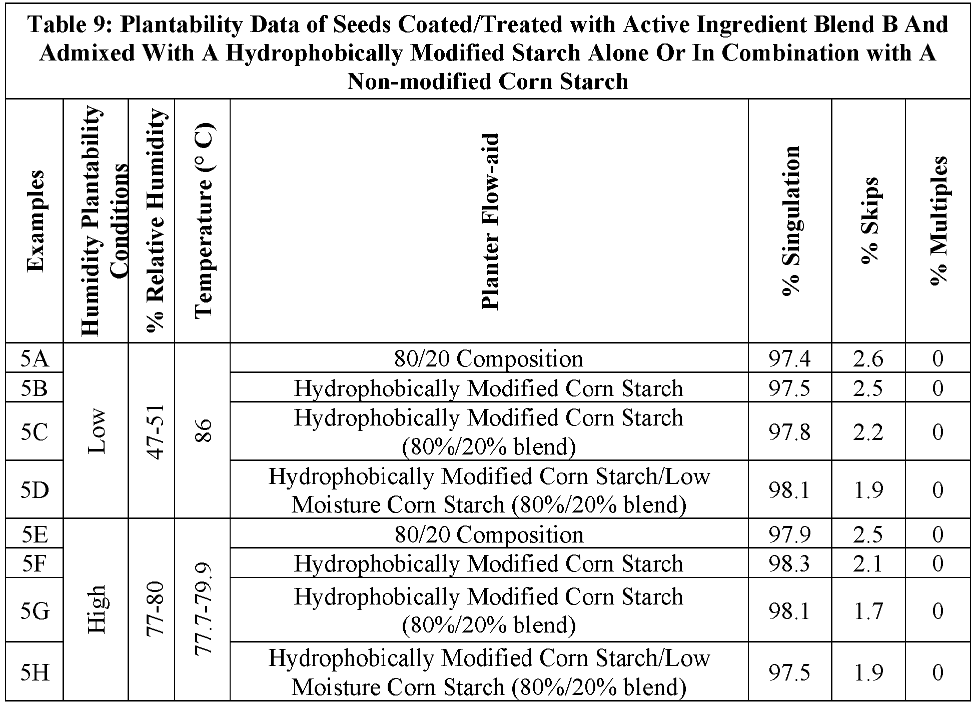

It is to be understood that while the invention has been described in conjunction with the detailed description thereof, the foregoing description is intended to illustrate, and not limit the scope of the invention, which is defined by the scope of the appended claims.

## Claims

1. A method for improving seed planter flowability comprising: admixing one or more seeds with a flow-aid composition comprising a modified starch or a mixture of a modified starch and a non-modified starch, wherein the one or more modified starch is a hydrophobically modified starch derivatized with one or more anionic moieties, etherified with an alkyl or alkenyl succinate and complexed with a polyvalent cation, wherein the one or more anionic moiety is carboxylate and the polyvalent cation is aluminum, and a mineral earth lubricant, wherein the mineral earth lubricant is selected from graphite, tricalcium phosphate, magnesium silicate, aluminum silicate, mica, talc, titanium oxide, kaolin clay, and mixtures thereof; wherein said flow-aid composition comprises from 1-99wt.% of said modified starch or mixture of modified starch and non-modified starch, based on total weight of the composition.

2. The method according to claim 1, wherein the one or more modified starch is an aluminum octenyl succinate starch.

3. The method of any preceding claim, wherein the one or more non-modified and/or modified starch are obtained from a starch base selected from corn, high amylose corn, waxy corn, potato, pea, rice, waxy rice, sago, tapioca, waxy tapioca, and mixtures thereof.

4. The method of any preceding claim, wherein said seeds are coated/treated with a seed coating composition comprising a binder and an active ingredient.

5. The method of claim 4, wherein said active ingredient is (i) a pesticide, a plant growth regulator, a crop desiccant, a fungicide, a bio-pesticide, a biologic containing bacterial or fungal genera, a bactericide, a bacteriostat, an insecticide, a nematicide, an insect repellant, or any combination thereof; or (ii) a pesticide, a plant growth regulator, a crop desiccant, a fungicide, a bactericide, a bacteriostat, an insecticide, an insect repellant, a triazine, a sulfonylurea, a uracil, a urea, and organophosphonate, a nitrilo oxime fungicide, an azole imidazole fungicide, a benzimidazole fungicide, a phenylpyrrole fungicide, a phenylamide fungicide, a carboxomide fungicide, a triazole fungicide, a sulfenamide fungicide, a dithio-carbamate fungicide, a neonicotinoid insecticide, an acylamine fungicide, a chlorinated aromatic, a dichloro aniline fungicide, a carbamate insecticide, an organothiophosphate insecticide, a perchlorinated organic insecticide, a miticide, a propynyl sulfite, a triazapentadiene miticide, a chlorinated aromatic miticide, a tetradifan, a dinitrophenol miticide, a binapacryl, an adjuvant, a surfactant, a fertilizer, a bio-pesticide from plant or microbial origin or biological live beneficial microbe from bacterial or fungal genera, or any combination thereof.

6. The method of any preceding claim, wherein said seed is (i) an agricultural seed, a vegetable seed, an herb seed, a wildflower seed, an ornamental seed, a grass seed, a tree seed, a bush seed, or any combination thereof; (ii) selected from soybean, cotton, corn, peanut, maize, wheat, barley, oat, rye triticale, mustard, sunflower, sugar beet, safflower, millet, chicory, flax, rapeseed, buckwheat, tobacco, hemp, cannabis, alfalfa, signal grass, clover, sorghum, chick pea, bean, pea, vetch, rice, sugar cane, linseed, asparagus, chives, celery, leek, garlic, beetroot, spinach, beet, curly kale, cauliflower, sprouting broccoli, savoy cabbage, white cabbage, red cabbage, kohlrabi, Chinese cabbage, turnip, endive, chicory, water melon, melon, cucumber, gherkin, marrow, parsley, fennel, pea, beans, radish, black salsify, eggplant, sweet corn, pop-corn, carrot, onion, tomato, pepper, lettuce, snap bean, cucurbit, shallot, broccoli, brassica, brussels sprouts, and any combination thereof; or (iii) a corn seed, cotton seed, rice seed, sorghum seed, oat seed, rye seed, barley seed, soybean seed, vegetable seed, wheat seed, sugarbeet seed, sunflower seed, lettuce seed, hemp seed, cannabis seed, spinach seed, or mixtures thereof.

7. A plurality of seeds comprising a flow-aid composition comprising a modified starch or a mixture of a modified starch and a non-modified starch, wherein the modified starch is a hydrophobically modified starch derivatized with one or more anionic moieties, etherified with an alkyl or alkenyl succinate and complexed with a polyvalent cation, wherein the one or more anionic moiety is carboxylate and the polyvalent cation is aluminum, and a mineral earth lubricant, wherein the mineral earth lubricant is selected from graphite, tricalcium phosphate, magnesium silicate, aluminum silicate, mica, talc, titanium oxide, kaolin clay, and mixtures thereof; wherein said flow-aid composition comprises from 1-99wt.% of said modified starch or mixture of modified starch and non-modified starch, based on total weight of the composition.

8. The seeds of claim 7, further comprising a seed coating composition comprising an active ingredient and a binder.

9. The seeds of any of claims 7 to 8, wherein said seeds are selected from corn seed, cotton seed, rice seed, sorghum seed, oat seed, rye seed, barley seed, soybean seed, vegetable seed, wheat seed, sugarbeet seed, sunflower seed, lettuce seed, hemp seed, cannabis seed, spinach seed, or mixtures thereof.

10. The seeds of any one of claims 7 to 9, wherein said modified starch and/or non-modified starch are obtained from a starch base selected from corn, high amylose corn, waxy corn, potato, pea, rice, waxy rice, sago, tapioca, waxy tapioca, and mixtures thereof.

11. Use of a flow-aid composition comprising a modified starch or a mixture of a modified starch and a non-modified starch, wherein the modified starch is a hydrophobically modified starch derivatized with one or more anionic moieties, etherified with an alkyl or alkenyl succinate and complexed with a polyvalent cation, wherein the one or more anionic moiety is carboxylate and the polyvalent cation is aluminum, and a mineral earth lubricant, wherein the mineral earth lubricant is selected from graphite, tricalcium phosphate, magnesium silicate, aluminum silicate, mica, talc, titanium oxide, kaolin clay, and mixtures thereof to make one or more seeds admixed therewith free-flowing; wherein said flow-aid composition comprises from 1-99wt.% of said modified starch or mixture of modified starch and non-modified starch, based on total weight of the composition.

12. The use of claim 11, wherein said flow aid composition reduces seed clumping and/or bridging relative to one or more seeds admixed with talc, graphite, or a mixture thereof.

## Patentansprüche

1. Verfahren zur Verbesserung der Fließfähigkeit von Saatgutpflanzern, umfassend: Mischen eines oder mehrerer Samen mit einer Fließhilfszusammensetzung, die eine modifizierte Stärke oder ein Gemisch aus einer modifizierten Stärke und einer nicht-modifizierten Stärke umfasst, wobei die eine oder mehreren modifizierte(e) Stärke(n) eine hydrophob modifizierte Stärke ist, die mit einem oder mehreren anionischen Resten derivatisiert, mit einem Alkyl- oder Alkenylsuccinat verethert und mit einem mehrwertigen Kation komplexiert ist, wobei der eine oder die mehreren anionische(n) Rest(e) Carboxylat und das mehrwertige Kation Aluminium ist,; und ein Mineralerde-Schmiermittel, wobei das Mineralerde-Schmiermittel ausgewählt ist aus Graphit, Tricalciumphosphat, Magnesiumsilikat, Aluminiumsilikat, Glimmer, Talk, Titanoxid, Kaolinton und Gemischen davon; wobei die Fließhilfszusammensetzung von zu 1 bis 99 Gew.-% die modifizierte Stärke oder das Gemisch aus modifizierter Stärke und nicht-modifizierter Stärke umfasst, basierend auf dem Gesamtgewicht der Zusammensetzung.

2. Verfahren nach Anspruch 1, wobei die eine modifizierte Stärke oder die mehreren modifizierten Stärken eine Aluminiumoctenylsuccinatstärke ist/sind.

3. Verfahren nach einem der vorhergehenden Ansprüche, wobei die eine oder die mehrere(n) nicht-modifizierte(n) Stärke(n) und/oder modifizierte(n) Stärke(n) aus einer Stärkebasis gewonnen werden, die aus Mais, Mais mit hohem Amylosegehalt, Wachsmais, Kartoffeln, Erbsen, Reis, Wachsreis, Sago, Tapioka, Wachstapioka und Gemischen davon ausgewählt ist.

4. Verfahren nach einem der vorhergehenden Ansprüche, wobei die Samen mit einer Samenbeschichtungszusammensetzung beschichtet/behandelt werden, die ein Bindemittel und einen Wirkstoff umfasst.

5. Verfahren nach Anspruch 4, wobei der Wirkstoff (i) ein Pestizid, ein Pflanzenwachstumsregulator, ein Erntetrocknungsmittel, ein Fungizid, ein Biopestizid, ein Bakterien- oder Pilzgattungen enthaltendes biologisches Präparat, ein Bakterizid, ein Bakteriostatikum, ein Insektizid, ein Nematizid, ein Insektenabwehrmittel oder eine beliebige Kombination davon ist; oder (ii) ein Pestizid, ein Pflanzenwachstumsregulator, ein Erntetrocknungsmittel, ein Fungizid, ein Bakterizid, ein Bakteriostatikum, ein Insektizid, ein Insektenabwehrmittel, ein Triazin, ein Sulfonylharnstoff, ein Uracil, ein Harnstoff und ein Organophosphonat, ein Nitriloxim-Fungizid, ein Azolimidazol-Fungizid, ein Benzimidazol-Fungizid, ein Phenylpyrrol-Fungizid, ein Phenylamid-Fungizid, ein Carboxomid-Fungizid, ein Triazol-Fungizid, ein Sulfenamid-Fungizid, ein Dithiocarbamat-Fungizid, ein Neonicotinoid-Insektizid, ein Acylamin-Fungizid, ein chloriertes aromatisches Mittel, ein Dichloranilin-Fungizid, ein Carbamat-Insektizid, ein Organothiophosphat-Insektizid, ein perchloriertes organisches Insektizid, ein Mitizd, ein Propinylsulfit, ein Triazapentadien-Mitizid, ein chloriertes aromatisches Mitizid, ein Tetradifan, ein Dinitrophenol-Mitizid, ein Binapacryl, ein Adjuvans, ein Tensid, ein Düngemittel, ein Biopestizid pflanzlichen oder mikrobiellen Ursprungs oder eine biologische lebende nützliche Mikrobe aus Bakterien- oder Pilzgattungen oder eine beliebige Kombination davon ist.

6. Verfahren nach einem der vorhergehenden Ansprüche, wobei der Samen (i) ein landwirtschaftlicher Samen, ein Gemüsesamen, ein Kräutersamen, ein Wildblumensamen, ein Ziersamen, ein Grassamen, ein Baumsamen, ein Buschsamen oder eine beliebige Kombination davon ist; (ii) ausgewählt ist aus Sojabohnen, Baumwolle, Mais, Erdnüssen, Mais, Weizen, Gerste, Hafer, Roggen, Triticale, Senf, Sonnenblume, Zuckerrübe, Saflor, Hirse, Chicorée, Flachs, Raps, Buchweizen, Tabak, Hanf, Cannabis, Luzerne, Signalgras, Klee, Sorghum, Kichererbsen, Bohnen, Erbsen, Wicken, Reis, Zuckerrohr, Leinsamen, Spargel, Schnittlauch, Sellerie, Lauch, Knoblauch, Rote Bete, Spinat, Rüben, Grünkohl, Blumenkohl, Brokkoli, Wirsingkohl, Weißkohl, Rotkohl, Kohlrabi, Chinakohl, Steckrüben, Endivien, Chicorée, Wassermelone, Melone, Gurke, Gewürzgurke, Gartenkürbis, Petersilie, Fenchel, Erbsen, Bohnen, Radieschen, Schwarzwurzel, Auberginen, Zuckermais, Popcorn, Karotte, Zwiebel, Tomate, Paprika, Blattsalat, Brechbohnen, Kürbisgewächse, Schalotten, Brokkoli, Brassica, Rosenkohl und jeder Kombination davon; oder (iii) ein Maissamen, Baumwollsamen, Reissamen, Sorghumsamen, Hafersamen, Roggensamen, Gerstensamen, Sojabohnensamen, Gemüsesamen, Weizensamen, Zuckerrübensamen, Sonnenblumensamen, Blattsalatsamen, Hanfsamen, Cannabissamen, Spinatsamen oder Gemischen davon.

7. Vielzahl von Samen, umfassend eine Fließhilfszusammensetzung, die eine modifizierte Stärke oder ein Gemisch aus einer modifizierten Stärke und einer nicht-modifizierten Stärke umfasst, wobei die modifizierte Stärke eine hydrophob modifizierte Stärke ist, die mit einem oder mehreren anionischen Resten derivatisiert, mit einem Alkyl- oder Alkenylsuccinat verethert und mit einem mehrwertigen Kation komplexiert ist, wobei der eine oder die mehreren anionische(n) Rest(e) Carboxylat und das mehrwertige Kation Aluminium ist, und ein Mineralerde-Schmiermittel, wobei das Mineralerde-Schmiermittel ausgewählt ist aus Graphit, Tricalciumphosphat, Magnesiumsilikat, Aluminiumsilikat, Glimmer, Talk, Titanoxid, Kaolinton und Gemischen davon; wobei die Fließhilfszusammensetzung 1-99 Gew.-% der modifizierten Stärke oder des Gemisches aus modifizierter Stärke und nicht-modifizierter Stärke umfasst, basierend auf dem Gesamtgewicht der Zusammensetzung.

8. Samen nach Anspruch 7, ferner umfassend eine Samenbeschichtungszusammensetzung, die einen Wirkstoff und ein Bindemittel umfasst.

9. Samen nach einem der Ansprüche 7 bis 8, wobei die Samen ausgewählt sind aus Maissamen, Baumwollsamen, Reissamen, Sorghumsamen, Hafersamen, Roggensamen, Gerstensamen, Sojabohnensamen, Gemüsesamen, Weizensamen, Zuckerrübensamen, Sonnenblumensamen, Blattsalatsamen, Hanfsamen, Cannabissamen, Spinatsamen oder Gemischen davon.

10. Samen nach einem der Ansprüche 7 bis 9, wobei die modifizierte Stärke und/oder die nicht-modifizierte Stärke aus einer Stärkebasis gewonnen werden, die aus Mais, Mais mit hohem Amylosegehalt, Wachsmais, Kartoffel, Erbse, Reis, Wachsreis, Sago, Tapioka, Wachstapioka und Gemischen davon ausgewählt ist.

11. Verwendung einer Fließhilfszusammensetzung, umfassend eine modifizierte Stärke oder ein Gemisch aus einer modifizierten Stärke und einer nicht-modifizierten Stärke, wobei die modifizierte Stärke eine hydrophob modifizierte Stärke ist, die mit einem oder mehreren anionischen Resten derivatisiert, mit einem Alkyl- oder Alkenylsuccinat verethert und mit einem mehrwertigen Kation komplexiert ist, wobei der eine oder die mehreren anionische(n) Rest(e) Carboxylat und das mehrwertige Kation Aluminium ist, und ein Mineralerde-Schmiermittel, wobei das Mineralerde-Schmiermittel ausgewählt ist aus Graphit, Tricalciumphosphat, Magnesiumsilikat, Aluminiumsilikat, Glimmer, Talk, Titanoxid, Kaolinton und Gemischen davon; wobei die Fließhilfszusammensetzung von zu 1 bis 99 Gew.-% die modifizierte Stärke oder das Gemisch aus modifizierter Stärke und nicht-modifizierter Stärke umfasst, basierend auf dem Gesamtgewicht der Zusammensetzung.

12. Verwendung nach Anspruch 11, wobei die Fließhilfsmittelzusammensetzung die Verklumpung und/oder Brückenbildung der Samen im Vergleich zu einem oder mehreren Samen verringert, denen Talk, Graphit oder ein Gemisch davon beigemischt ist.

## Revendications

1. Procédé d'amélioration de l'aptitude à l'écoulement d'une planteuse de semences comprenant : le mélange d'une ou plusieurs semences avec une composition d'aide à l'écoulement comprenant un amidon modifié ou un mélange d'un amidon modifié et d'un amidon non modifié, dans lequel le ou les amidons modifiés sont un amidon hydrophobiquement modifié dérivé avec une ou plusieurs parties anioniques, éthérifié avec un succinate d'alkyle ou d'alcényle et complexé avec un cation polyvalent, dans lequel la ou les parties anioniques sont des carboxylates et le cation polyvalent est de l'aluminium, et un lubrifiant à base de terre minérale, dans lequel le lubrifiant à base de terre minérale est choisi parmi graphite, phosphate tricalcique, silicate de magnésium, silicate d'aluminium, mica, talc, oxyde de titane, argile kaolinique et des mélanges de ceux-ci ; dans lequel ladite composition d'aide à l'écoulement comprend de 1 à 99 % en poids dudit amidon modifié ou dudit mélange d'amidon modifié et d'amidon non modifié, par rapport au poids total de la composition.

2. Procédé selon la revendication 1, dans lequel le ou les amidons modifiés sont des octénylsuccinates d'amidon d'aluminium.

3. Procédé selon l'une quelconque revendication précédente, dans lequel le ou les amidons non modifiés et/ou modifiés sont obtenus à partir d'une base d'amidon choisie parmi maïs, maïs à haute teneur en amylose, maïs cireux, pomme de terre, pois, riz, riz cireux, sagou, tapioca, tapioca cireux et des mélanges de ceux-ci.

4. Procédé selon l'une quelconque revendication précédente, dans lequel lesdites semences sont enrobées/traitées avec une composition d'enrobage de semences comprenant un liant et un ingrédient actif.

5. Procédé selon la revendication 4, dans lequel ledit ingrédient actif est (i) un pesticide, un régulateur de croissance des plantes, un dessiccant de cultures, un fongicide, un biopesticide, un produit biologique contenant des genres bactériens ou fongiques, un bactéricide, un bactériostatique, un insecticide, un nématicide, un insectifuge, ou une combinaison quelconque de ceux-ci ; ou ii) un pesticide, un régulateur de croissance des plantes, un dessiccant de cultures, un fongicide, un bactéricide, un bactériostatique, un insecticide, un insectifuge, une triazine, une sulfonylurée, un uracile, une urée, et un organophosphonate, un fongicide à base de nitrilo oxime, un fongicide à base d'azole imidazole, un fongicide benzimidazole, un fongicide phénylpyrrole, un fongicide phénylamide, un fongicide carboxomide, un fongicide triazole, un fongicide sulfénamide, un fongicide dithio-carbamate, un insecticide néonicotinoïde, un fongicide acylamine, un aromatique chloré, un fongicide à base de dichloro aniline, un insecticide à base de carbamate, un insecticide à base d'organothiophosphate, un insecticide organique perchloré, un acaricide, un propynyl sulfite, un acaricide à base de triazapentadiène, un acaricide à base d'aromatique chloré, un tétradifan, un acaricide à base de dinitrophénol, un binapacryl, un adjuvant, un surfactant, un engrais, un biopesticide d'origine végétale ou microbienne ou un microbe biologique vivant bénéfique appartenant à des genres bactériens ou fongiques, ou une combinaison quelconque de ceux-ci.

6. Procédé selon l'une quelconque revendication précédente, dans lequel ladite semence est (i) une semence agricole, une semence potagère, une semence d'herbe, une semence de fleur sauvage, une semence ornementale, une semence de gazon, une semence d'arbre, une semence d'arbuste, ou une combinaison quelconque de celles-ci ; (ii) choisie parmi soja, coton, maïs, arachide, maïs, blé, orge, avoine, seigle, triticale, moutarde, tournesol, betterave à sucre, carthame, millet, chicorée, lin, colza, sarrasin, tabac, chanvre, cannabis, luzerne, brachiara, trèfle, sorgho, pois chiche, haricot, pois, vesce, riz, canne à sucre, lin, asperge, ciboulette, céleri, poireau, ail, betterave, épinard, betterave, chou frisé, chou-fleur, brocoli, chou de Milan, chou blanc, chou rouge, chou-rave, chou chinois, navet, endive, chicorée, pastèque, melon, concombre, cornichon, courge à moelle, persil, fenouil, pois, haricots, radis, salsifis noir, aubergine, maïs doux, maïs perlé, carotte, oignon, tomate, poivron, laitue, haricot mange-tout, cucurbitacée, échalote, brocoli, brassica, choux de Bruxelles, et une combinaison quelconque de ceux-ci ; ou iii) une semence de maïs, une semence de coton, une semence de riz, une semence de sorgho, une semence d'avoine, une semence de seigle, une semence d'orge, une semence de soja, une semence potagère, une semence de blé, une semence de betterave à sucre, une semence de tournesol, une semence de laitue, une semence de chanvre, une semence de cannabis, une semence d'épinard ou des mélanges de celles-ci.

7. Pluralité de semences comprenant une composition d'aide à l'écoulement comprenant un amidon modifié ou un mélange d'un amidon modifié et d'un amidon non modifié, dans lesquelles l'amidon modifié est un amidon hydrophobiquement modifié dérivé avec une ou plusieurs parties anioniques, éthérifié avec un succinate d'alkyle ou d'alcényle et complexé avec un cation polyvalent, dans lesquelles la ou les parties anioniques sont des carboxylates et le cation polyvalent est de l'aluminium, et un lubrifiant à base de terre minérale, dans lesquelles le lubrifiant à base de terre minérale est choisi parmi graphite, phosphate tricalcique, silicate de magnésium, silicate d'aluminium, mica, talc, oxyde de titane, argile kaolinique et des mélanges de ceux-ci ; dans lesquelles ladite composition d'aide à l'écoulement comprend de 1 à 99 % en poids dudit amidon modifié ou dudit mélange d'amidon modifié et d'amidon non modifié, par rapport au poids total de la composition.

8. Semences selon la revendication 7, comprenant en outre une composition d'enrobage de semences comprenant un ingrédient actif et un liant.

9. Semences selon l'une quelconque des revendications 7 à 8, dans lesquelles lesdites semences sont choisies parmi semence de maïs, semence de coton, semence de riz, semence de sorgho, semence d'avoine, semence de seigle, semence d'orge, semence de soja, semence potagère, semence de blé, semence de betterave à sucre, semence de tournesol, semence de laitue, semence de chanvre, semence de cannabis, semence d'épinard, ou des mélanges de celles-ci.

10. Semences selon l'une quelconque des revendications 7 à 9, dans lesquelles lesdits amidon modifié et/ou amidon non modifié sont obtenus à partir d'une base d'amidon choisie parmi maïs, maïs à haute teneur en amylose, maïs cireux, pomme de terre, pois, riz, riz cireux, sagou, tapioca, tapioca cireux et des mélanges de ceux-ci.

11. Utilisation d'une composition d'aide à l'écoulement comprenant un amidon modifié ou un mélange d'un amidon modifié et d'un amidon non modifié, dans laquelle l'amidon modifié est un amidon hydrophobiquement modifié dérivé avec une ou plusieurs parties anioniques, éthérifié avec un succinate d'alkyle ou d'alcényle et complexé avec un cation polyvalent, dans laquelle la ou les parties anioniques sont des carboxylates et le cation polyvalent est de l'aluminium, et un lubrifiant à base de terre minérale, dans laquelle le lubrifiant à base de terre minérale est choisi parmi graphite, phosphate tricalcique, silicate de magnésium, silicate d'aluminium, mica, talc, oxyde de titane, argile kaolinique et des mélanges de ceux-ci, afin de rendre une ou plusieurs semences mélangées à cette composition non agglomérées ; dans laquelle ladite composition d'aide à l'écoulement comprend de 1 à 99 % en poids dudit amidon modifié ou dudit mélange d'amidon modifié et d'amidon non modifié, par rapport au poids total de la composition.

12. Utilisation selon la revendication 11, dans laquelle ladite composition d'aide à l'écoulement réduit le mottage et/ou le pontage de semences par rapport à une ou plusieurs semences mélangées avec du talc, du graphite ou un mélange de ceux-ci.
